Europäisches Patentamt

European Patent Office

Office européen des brevets

(11) Veröffentlichungsnummer: **0 341 479**
**A2**

(12) **EUROPÄISCHE PATENTANMELDUNG**

(21) Anmeldenummer: 89107350.4

(22) Anmeldetag: 24.04.89

(51) Int. Cl.⁴: **B29C 67/24 , B29C 37/00 , B29C 33/60**

(30) Priorität: 07.05.88 DE 3815616

(43) Veröffentlichungstag der Anmeldung:
15.11.89 Patentblatt 89/46

(84) Benannte Vertragsstaaten:
DE ES FR GB IT NL SE

(71) Anmelder: **BAYER AG**

**D-5090 Leverkusen 1 Bayerwerk(DE)**

(72) Erfinder: **Boden, Heinrich**
**Sperberweg 14**
**D-5090 Leverkusen 3(DE)**
Erfinder: **Ganster, Otto, Dr.**
**Droste-Huelshoff-Strasse 5**
**D-5060 Odenthal(DE)**
Erfinder: **Müller, Heinz**
**Buchenweg 16**
**D-5090 Leverkusen 1(DE)**

(54) Verfahren und Formwerkzeug zum Herstellen von Formteilen aus einem flüssigen Reaktionsgemisch.

(57) Um bei der Herstellung von Formteilen (4) in Formwerkzeugen aus fließfähigen Reaktionswerkstoffen auf den Sichtflächen (5) sich beim Aushärten bildende Einfallstellen zu vermeiden, stellt man die Haftung der den unsichtbaren Oberflächenanteilen (6) entsprechenden Wandungsanteile (8) des Formhohlraumes (3) niedriger ein, wodurch sich entstehende Einfallstellen stets auf den unsichtbaren Oberflächenanteilen (6) bilden.

FIG.1

EP 0 341 479 A2

**Verfahren und Formwerkzeug zum Herstellen von Formteilen aus einem flüssigen Reaktionsgemisch**

Die Erfindung betrifft ein Verfahren und ein Formwerkzeug zum Herstellen von Formteilen mit bei deren späterem bestimmungsgemäßen Gebrauch vorhandenen Sichtflächenanteilen und unsichtbaren Oberflächenanteilen, wobei ein Massivstoff oder mikrozellularen Stoff bildendes, fließfähiges Reaktionsgemisch in den Formhohlraum eines Formwerkzeuges eingebracht wird.

Formteile der genannten Art werden in der Regel aus Polyurethan-Reaktionswerkstoffen in RIM-Verfahren (Reaction-Injection-Moulding) hergestellt (US-PS 4 714 579).

In entsprechender Gestaltung dienen diese Formteile z.B. in der Automobilindustrie als Türseitenverkleidungen, Stoßfänger, Kotflügel, Seitenschürzen und dergleichen. Bei ihrem bestimmungsgemäßen Gebrauch besitzen sie in der Regel Sichtflächen und unsichtbare Flächen bzw. Flächen, welche optisch weniger ins Auge fallen.

Ein Problem bei der Herstellung solcher Formteile, insbesondere aus Reaktionsgemischen, welche sich in einem Formwerkzeug ohne Trennmittel verarbeiten lassen, ist das Auftreten von flachen Einfallstellen, sogenannten "sink-marks", an der Oberfläche des Formteils, welche beim Aushärten durch deren Schrumpfung entstehen, indem sich das Formteil lokal von der Formhohlraumwandung ablöst. Bei entsprechendem Blickwinkel fallen solche sinkmarks störend ins Auge. Erfahren solche fehlerhaften Formteile eine Lackierung, so werden diese sink-marks besonders augenfällig.

Um diese Einfallstellen zu vermeiden, hat man bisher mit "innerem" Nachdruck oder "äußerem" Nachdruck gearbeitet (EP-A 2 206 100 entsprechend US-A-4 714 579). Diese Techniken sind recht aufwendig und haben ihre Grenzen.

Inneren Nachdruck erzielt man dadurch, daß man das für die Fertigung des Formteils erzeugte Reaktionsgemisch bzw. die dafür verwendeten Reaktionskomponenten mit Gas belädt. Diese eingeschlossenen Gasbläschen stehen wegen der im Verlauf der Aushärtung ansteigenden Reaktionstemperatur unter erhöhtem Druck und wirken der Schwindung entgegen, wodurch die frühzeitige lokale Ablösung des Formteils von der Wandung des Formhohlraumes verhindert wird. Diese Technik hat den Nachteil, daß sie bei Formteilen unter 2,5 mm Wanddicke, bei langen Fließwegen des Reaktionsgemisches im Formwerkzeug, großen Volumenströmen, erhöhter Viskosität des Reaktionsgemisches und kurzen Schußzeiten den Anforderungen nicht mehr gerecht wird, weil ein partielles, unerwünschtes Lösen der Gase im Reaktionsgemisch erfolgt. Bei dünnwandigen Formteilen wird diese Wirkung durch Wärmeableitung in die kühlende Formwerkzeugwand noch verstärkt. Das gelöste und in der plastischen Formmasse fixierte Gas steht dann bei einer Verfestigung des Reaktionsgemisches nicht mehr als Treibmittel zur Erzeugung des inneren Nachdrucks zur Verfügung. Ein ausreichender Nachdruck wird dann nicht aufgebaut. Im übrigen ist auch eine Gasbeladung aus Festigkeitsgründen oft unerwünscht.

Bei der Technik des äußeren Nachdruckes arbeitet man mit Hilfe eines von außen auf die Füllung des Formhohlraumes ausgeübten Druckes. Die dabei auftretende Kompression kompensiert die schwindungsbedingte Verringerung des Volumens der Reaktionsmasse und verhindert so die Ablösung des Formteils von der Formhohlraumwandung. Die hierfür erforderlichen Werkzeuge und Schließen sind sehr aufwendig. In Anteilen des Formhohlraumes, welche sich parallel zur Schließrichtung des Formwerkzeuges erstrecken, pflanzt sich der aufgebrachte äußere Nachdruck wegen der kritischen Verfestigungscharakteristik des Reaktionsgemisches nur bedingt fort. Deshalb hat diese Technik nur in Sonderfällen Eingang gefunden.

Es besteht die Aufgabe, ein Verfahren und ein Formwerkzeug zu schaffen, womit man die Einfallstellen auf Sichtflächen von aus fließfähigen Reaktionsgemischen hergestellten Formteilen auf einfache Weise vermeiden kann.

Diese Aufgabe wird dadurch gelöst, daß die den unsichtbaren Oberflächenanteilen des Formteiles entsprechenden Wandungsanteile des Formhohlraumes auf eine niedrigere Haftung zum Formteil eingestellt werden als die den Sichtflächenanteilen des Formteiles entsprechenden Wandungsanteile des Formhohlraumes.

Gemäß einer ersten Durchführungsform des neuen Verfahrens erfolgt die Einstellung der niedrigeren Haftung durch entsprechende Rauhigkeit.

Eine besonders vorteilhafte Durchführungsform besteht darin, daß die Einstellung der niedrigeren Haftung durch eine die Haftung herabsetzende, bleibende Beschichtung erfolgt.

Durch diese einfachen Maßnahmen wird erreicht, daß sinkmarks auf den Sichtflächen vermieden werden, indem ganz bewußt die Möglichkeit des Entstehens solcher Ablösungserscheinungen auf die bei bestimmungsgemäßen Gebrauch unsichtbaren Oberflächenbereiche verlagert wird, wo sie nicht stören.

Der Begriff "unsichtbare Oberflächenanteile" ist über den eigentlichen Wortlaut hinausgehend zu verstehen, d.h. es muß sich bei bestimmungsgemäßen Gebrauch nicht unbedingt um unsichtbare Oberflächenanteile handeln, sondern gegebenenfalls um solche, welche zwar sichtbar sind, wo aber solche Einfallstellen nicht ins Auge fallen.

Das neue Formwerkzeug zum Herstellen von Formteilen mit bei deren späterem bestimmungsgemäßen Gebrauch vorhandenen Sichtflächenanteilen und unsichtbaren Oberflächenanteilen aus einem Massivstoff oder mikrozellularen Stoff bildenden, fließfähigen Reaktionsgemisch geht aus von zwei einen Formhohlraum einschließenden Formwerkzeughälften.

Das Neue ist darin zu sehen, daß die den unsichtbaren Oberflächenanteilen des zu fertigenden Formteiles entsprechenden Wandungsteile des Formhohlraumes eine niedrigere Haftung zum Formteil aufweisen als die den Sichtflächenanteilen des Formteils entsprechenden Wandungsanteile des Formhohlraumes.

Die unterschiedliche Haftung läßt sich bereits durch unterschiedliche Oberflächenbeschaffenheit, insbesondere Rauhigkeit der entsprechenden Wandungsteile, erzielen.

Besonders vorteilhaft ist es, die den unsichtbaren Oberflächenanteilen des Formteiles entsprechenden Wandungsteile des Formhohlraumes mit einer bleibenden, die Haftung herabsetzenden Beschichtung zu versehen.

Als entsprechende Beschichtung eignen sich vorzugsweise Nickel, Chrom, Siliconharz, Polytetrafluorethylen, Keramik sowie ein - gegebenenfalls poröser - Nickel-, Chrom-oder Keramikbelag mit eingelagertem Polytetrafluorethylen.

In der Zeichnung ist das neue Formwerkzeug sowie ein damit gefertigtes Formteil rein schematisch im Schnitt dargestellt und nachstehend näher erläutert. Es zeigen:

Fig. 1 das Formwerkzeug und
Fig. 2 das Formteil.

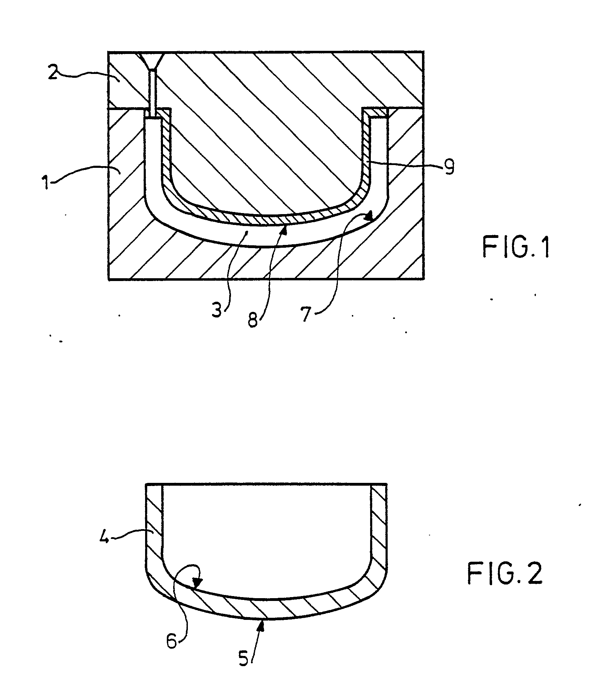

Das Formwerkzeug (Fig. 1) besteht aus zwei Formwerkzeughälften 1, 2, welche einen Formhohlraum 3 einschließen. Das Formteil (Fig. 2) ist mit 4 bezeichnet. Es handelt sich dabei um eine Seitenschürze für ein Kraftfahrzeug. Dieses Formteil 4 weist einen Sichtflächenanteil 5 sowie einen nach der Montage unsichtbaren Oberflächenanteil 6 auf. Dem Sichtflächenanteil 5 entspricht der Wandungsanteil 7 des Formhohlraumes 3, und dem nach der Montage unsichtbaren Oberflächenanteil 6 entspricht der restliche Wandungsanteil 8. Zufälligerweise befindet sich der gesamte Wandungsanteil 7 an der Formwerkzeughälfte 1 und der Wandungsanteil 8 an der Formwerkzeughälfte 2. Der Wandungsanteil 8 weist in diesem Falle eine die Haftung gegenüber dem aushärtenden Formteil 4 herabsetzende Beschichtung 9 aus Polytetrafluorethylen von 50 μm Dicke auf.

## Ansprüche

1. Verfahren zum Herstellen von Formteilen (4) mit bei deren späterem bestimmungsgemäßen Gebrauch vorhandenen Sichtflächenanteilen (5) und unsichtbaren Oberflächenanteilen (6), wobei ein Massivstoff oder mikrozellularen Stoff bildendes, fließfähiges Reaktionsgemisch in den Formhohlraum (3) eines Formwerkzeuges eingebracht wird, dadurch gekennzeichnet, daß die den unsichtbaren Oberflächenanteilen (6) des Formteiles (4) entsprechenden Wandungsteile (8) des Formhohlraumes (3) auf eine niedrigere Haftung zum Formteil (4) eingestellt werden als die den Sichtflächenanteilen (5) des Formteiles (3) entsprechenden Wandungsanteile (7) des Formhohlraumes (3).

2. Verfahren nach Anspruch 1, dadurch gekennzeichnet, daß die Einstellung der niedrigeren Haftung durch entsprechende Rauhigkeit erfolgt.

3. Verfahren nach Anspruch 1, dadurch gekennzeichnet, daß die Einstellung der niedrigeren Haftung durch eine die Haftung herabsetzende, bleibende Oberflächenbeschichtung (9) erfolgt.

4. Formwerkzeug zum Herstellen von Formteilen (4) mit bei deren späterem bestimmungsgemäßen Gebrauch vorhandenen Sichtflächen (5) und unsichtbaren Oberflächenanteilen (6), aus einem Massivstoff oder mikrozellularen Stoff bildenden, fließfähigen Reaktionsgemisch, bestehend aus zwei einen Formhohlraum (3) einschließenden Formwerkzeughälften (1, 2), dadurch gekennzeichnet, daß die den unsichtbaren Oberflächenanteilen (6) des zu fertigenden Formteiles (4) entsprechenden Wandungsanteile (8) des Formhohlraumes (3) eine niedrigere Haftung zum Formteil (4) aufweisen als die den Sichtflächenanteilen (5) des Formteils (4) entsprechenden Wandungsanteile (7) des Formhohlraumes (3).

5. Formwerkzeug nach Anspruch 4, dadurch gekennzeichnet, daß die niedrigere Haftung durch entsprechende Oberflächenrauhigkeit eingestellt ist.

6. Formwerkzeug nach Anspruch 4, dadurch gekennzeichnet, daß die den unsichtbaren Oberflächenanteilen (6) entsprechenden Wandungsanteile (8) des Formhohlraumes (3) mit einer bleibenden, die Haftung herabsetzenden Beschichtung (9) versehen sind.

7. Formwerkzeug nach Anspruch 5, dadurch gekennzeichnet, daß die Beschichtung (9) aus Nikkel, Chrom, Keramik, Siliconharz, Polytetrafluorethylen besteht.

8. Formwerkzeug nach Anspruch 5, dadurch gekennzeichnet, daß die Beschichtung (9) aus einem Nickel-, Chrom- oder Keramikbelag mit eingelagertem Polytetrafluorethylen besteht.

FIG.1

FIG.2

LeA 26093